# EUROPÄISCHE PATENTSCHRIFT

(11) **EP 3 298 257 B1**
(45) Veröffentlichungstag und Bekanntmachung des Hinweises auf die Patenterteilung: **01.09.2021**
(21) Anmeldenummer: 16726512.3
(22) Anmeldetag: 25.05.2016
(51) Int. Cl.: F02B 37/18, F02M 26/05, F02M 26/07, F02M 26/15, F02M 26/23, F02M 26/35, F02M 26/44

(54) **AGR-SYSTEM MIT PARTIKELFILTER UND WASTEGATE**
EGR SYSTEM WITH PARTICLE FILTER AND WASTEGATE
SYSTÈME EGR AVEC UN FILTRE À PARTICULES ET UNE SOUPAPE DE DÉCHARGE

(30) Priorität: 26.05.2015 DE 102015108223; 26.05.2015 US 201514721288
(43) Veröffentlichungstag der Anmeldung: 28.03.2018
(73) Patentinhaber: Tenneco GmbH, 67840 Edenkoben (DE)
(72) Erfinder: FISCHER, Michael, 55124 Mainz (DE)
(74) Vertreter: STT Sozietät Thews & Thews
(86) Internationale Anmeldenummer: PCT/EP2016/061791
(87) Internationale Veröffentlichungsnummer: WO 2016/189028

(56) Entgegenhaltungen:
- EP-A1- 1 405 995
- EP-A1- 2 669 496
- EP-A2- 2 395 224
- EP-A2- 2 678 095
- WO-A2-2008/127755
- DE-A1-102010 046 747
- DE-A1-102012 004 368
- FR-A1- 2 894 624

## Beschreibung

Die Erfindung bezieht sich auf ein Abgasleitsystem für einen Ottomotor mit einer an einen Auslasskrümmer des Ottomotors anschließbaren Abgasleitung, mit einer an einen Einlasskrümmer des Ottomotors anschließbaren Einlassleitung und mit einer in der Abgasleitung angeordneten Turbine.

Aus der US 5,671,600 A ist ein Abgasrückführsystem für Dieselmotoren bekannt. Am Abgasauslass bzw. an der Abgasleitung ist ein Partikelfilter vorgesehen, an den eine Abgasrückführungsleitung anschließt. Die Abgasrückführungsleitung mündet stromauf eines Ladeluftverdichters in der Einlassleitung. Innerhalb der Abgasrückführungsleitung ist ein Ventil zur Veränderung des Abgasmassestroms vorgesehen. Der Partikelfilter dient dem Schutz des Ladeluftverdichters bzw. des Ladeluftkühlers vor Verschmutzung.

Aus der DE 10 2012 021 882 A1 ist ein Partikelfilter im Hauptabgasstrom eines Ottomotors bekannt. Der Partikelfilter regeneriert anders als beim Dieselmotor weitestgehend ohne zusätzliche aktive Maßnahmen, d.h. die bis dahin zurückgehaltene Partikelmasse (Rußpartikel mit an- oder eingelagerten Kohlenwasserstoffen) verbrennt bei normalen ottomotorischen Randbedingungen im Wesentlichen zu CO2 bzw. zu H20. Hierzu sind ausreichend hohe Abgastemperaturen von mehr als 500 °C sowie Sauerstoff zur Verbrennung erforderlich. Diese Abgastemperatur wird bald nach Motorstart in verschiedensten Betriebsbereichen des Ottomotors erreicht. Da die überwiegende Anzahl von Ottomotoren stöchiometrisch betrieben wird, kann der Sauerstoffgehalt im Abgas zu niedrig für einen vollständigen Abbrand der im Filter enthaltenen Partikelmasse sein. Für diesen Fall helfen im transienten Betrieb übliche Schubabschaltungsphasen des Ottomotors, in denen aufgrund des Entfalls der Lastanforderung durch den Fahrer die Einspritzung des Motors aus Verbrauchsgründen abgeschaltet wird. Da der Motor bei eingelegtem Gang als Motorbremse zur Verringerung der Fahrzeuggeschwindigkeit führt, wird durch den geschleppten Motor reine Luft durch das Abgassystem gespült. Diese unverbrannte Luft stößt auf die zuvor vom Motorabgas erhitzten Partikel im Partikelfilter.

Bei ausreichender Temperatur entflammen diese Partikel und verbrennen zu Gasen, die durch den Partikelfilter entweichen können. Hierdurch wird der Partikelfilter gereinigt.

Aus der DE 10 2013 003 701 A1, der DE 10 2013 008 426 und der WO 2008 127 755 A2 sind zusätzliche Maßnahmen wie ein Sekundärluftsystem, um durch Luftüberschuss aktiv die Regenerierung des Partikelfilters zu erreichen, bekannt.

Die DE 10 2009 014 277 A1 beschreibt eine Vorrichtung zum Betreiben einer Diesel-Brennkraftmaschine mit einer Abgasleitung sowie einer Abgasrückführleitung, die an eine Einlassleitung anschließt. Über ein 3-Wege-Ventil kann die Abgasrückführleitung wahlweise in einem Regenerationsbetrieb des in der Abgasrückführleitung befindlichen Dieselpartikelfilters mit der Abgasanlage verbunden werden, wobei während des Regulärbetriebes die Abgasrückführleitung über besagtes 3-Wege-Ventil mit der Einlassleitung zwecks Rückführung von Abgas in Durchflussverbindung steht.

Die DE 10 2010 046 747 A1 beschreibt ein Verfahren zum Betreiben eines Ottomotors mit 3-Wege-Katalysator und nachgeschaltetem Partikelfilter. Zwecks Regeneration des im Abgasstrang befindlichen Partikelfilters ist ein Bypass vorgesehen, der am 3-Wege-Katalysator vorbeigeführt ist, wobei innerhalb dieses Bypasses eine Luftpumpe zur Zufuhr von Sekundärluft zwecks Regeneration des Partikelfilters vorgesehen ist. Gleichzeitig wird hierbei eine Niederdruck-Abgasrückführleitung mit Sekundärluft versorgt.

Die EP 2 194 351 B1 beschreibt einen Abgaskühler für einen Dieselmotor.

Die EP 2 669 496 A1 beschreibt eine Abgasnachbehandlungseinrichtung mit einer Abgasrückführleitung.

Die DE 10 2012 004 368 A1 beschreibt eine Abgasanlage für einen Dieselmotor oder einen Ottomotor mit einer Hochdruck-Abgasrückführleitung.

Die WO 2012/114187 A2 (EP 2 678 095 A2) beschreibt ein Abgassystem für eine magerbetriebene Brennkraftmaschine mit einer Niederdruck-Abgasrückführleitung.

Die EP 2 395 224 A2 zeigt eine Abgasanlage mit einer Abgasrückführungsleitung.

Die EP 1 405 995 A1 zeigt eine Abgasanlage für einen Dieselmotor mit einer Abgasrückführungsleitung und einer Bypassleitung, die stromab einer Reinigungseinheit abzweigen.

Die FR 2 894 624 A1 zeigt eine Abgasanlage für eine Kolbenbrennkraftmaschine mit einer Abgasrückführungsleitung und einer Bypassleitung, die zwei parallel geschalteten Reinigungseinheiten mit Katalysatorbausteinen aufweisen.

Der Erfindung liegt die Aufgabe zugrunde, ein Abgasleitsystem für einen Ottomotor derart auszubilden und anzuordnen, dass eine verbesserte Abgasreinigung gewährleistet wird.

Gelöst wird die Aufgabe erfindungsgemäß durch das Kennzeichen des Patentanspruchs 1.

Eine Beschichtung des Partikelfilters wiederum führt zu verringerten Schadstoffemissionen im Ansaugsystem, die die Verbrennung zusätzlich vorteilhaft beeinflussen können. Die Beschichtung des Partikelfilters wirkt bei gefeuertem Motorbetrieb. Gleiches gilt für die Filterwirkung des Partikelfilters. Im Schubbetrieb kann die Regeneration des Partikelfilters erfolgen. Durch die Kombination von Partikelfilterung und katalytischer Umwandlung weiterer unvollständiger Verbrennungsprodukte weist das dem Motor wieder zugeführte Abgas einen hohen Reinheitsgrad sowohl bezüglich der Verbrennungsprodukte als auch bezüglich der Partikel auf. Dies wirkt sich positiv auf die Vermeidung von Ablagerungen im Ansaugsystem sowie auf die Verbrennung, mithin die Schadstoffemission und den Wirkungsgrad des Ottomotors aus.

Der Abgaskatalysator ist erfindungsgemäß stromab der Mündung der Bypass-Leitung platziert. Durch den 3-Wege-Katalysator bzw. den Oxidationskatalysator werden die vorstehend genannten Vorteile verringerter Schadstoffemissionen im Hauptabgasstrang erreicht.

Wenn die Bypass-Leitung an der Abgasrückführungsleitung abzweigt, ist der Abzweig erfindungsgemäß stromab des Partikelfilters der Abgasrückführungsleitung. Damit ist die Bypass-Leitung ebenfalls mit dem Partikelfilter versorgt.

Das hier beschriebene Abgasleitsystem weist im Kern ein Abgasrückführsystem (AGR-System) auf. Ein AGR-System besteht in der Regel zumindest aus einer Abgasrückführungsleitung (AGR-Leitung), einem Abgasrückführungskühler (AGR-Kühler) und einer Abgasrückführungsklappe (AGR-Ventil).

Im AGR-System und im Ansaugsystem von Ottomotoren sind Ablagerungen zu beobachten, die man als "wet soot" oder "fouling" bezeichnet, die gravierende Auswirkungen wie verringerte Kühlleistung, Verstopfung, schlechte Gleichverteilung sowie unregelmäßige Verbrennung zur Folge haben können. Daher kommen AGR-Systeme bei Ottomotoren bislang nur selten und mit Einschränkungen zur Anwendung.

Grundsätzlich wie auch im Rahmen dieser Patentanmeldung wird unterschieden zwischen drei Betriebszonen eines Motors, dem höheren Lastbetrieb, dem Teillastbetrieb und dem Schubbetrieb. Der höhere Lastbetrieb wird mitunter noch einmal unterteilt in einen Volllastbetrieb und einen Hochlastbetrieb, was für die hier vorliegende Anmeldung jedoch ohne weitere Bedeutung ist.

Ausgehend vom Teillastbetrieb wird der Lastbetrieb dann erreicht, wenn der Motor aufgrund einer Erhöhung der Last ohne weitere Maßnahmen wie insbesondere eine hier beschriebene Abgasrückführung die Klopfgrenze erreichen würde, mithin Klopfen einsetzen würde. Unterhalb des Teillastbetriebs liegt der Schubbetrieb, innerhalb dessen der Motor keine bzw. keine nennenswerte Antriebsleistung an das Fahrzeug abgibt.

Bei AGR-Systemen für Ottomotoren ist eine Kühlung des rückgeführten Abgases zur Optimierung der Verbrennung vorteilhaft, da eine Rückführung ungekühlter Abgase, insbesondere bei höheren Lasten, mithin im Hochlastbetrieb und im Volllastbetrieb, zu höheren Ansaugtemperaturen aufgrund der zugeführten heißen Abgase führt. Dies wiederum hat Füllungsverluste und eine Erhöhung der Klopfneigung des Ottomotors zur Folge. Damit einher gehen unerwünschte Leistungsverluste des Motors. Diese Nachteile können durch das Abkühlen des zurückgeführten Abgases vermindert werden. Dies hat aber die Entstehung einer erhöhten Menge an Kondensaten - bestehend aus Wasser und/oder Kohlenwasserstoffen bzw. Kohlenwasserstoffverbindungen und unvollständig verbrannten Verbrennungsrückständen - im zurückgeführten Abgas zur Folge, was zu einem erhöhten Grad an Versottung in Form nasser, adhäsiver Ablagerungen im AGR- sowie im Ansaugluftsystem führt. Eine Kombination des Partikelfilters mit dem Ladeluftkühler, wie es nach EP 2 194 351 B1 für einen Dieselpartikelfilter beschrieben ist, kommt demnach nicht in Betracht, um eine Verstopfungsgefahr durch die zuvor beschriebenen Ablagerungen im Partikelfilter zu vermeiden.

Zudem erreicht ein Partikelfilter die für die Selbstregeneration des Partikelfilters erforderliche Mindesttemperatur im Partikelfilter nur in einem deutlich eingeschränkten Betriebsbereich. Es sind in diesem Fall zusätzliche aktive Regenerationsmaßnahmen, die betriebs- und kostenbedingt von Nachteil sind, erforderlich. Im Gegensatz zu den im Otto-Abgas mitgeführten nassen Bestandteilen handelt es sich bei Dieselpartikeln um trockenere Bestandteile, die eine geringere Kondensations- und Verklebungsneigung aufweisen können. Zudem sind aktive Regenerierungsmaßnahmen für den Partikelfilter beim Dieselmotor aufgrund der dort herrschenden niedrigeren Abgastemperaturen im Allgemeinen in sehr weiten motorischen Betriebsbereichen erforderlich.

Partikelfilter für Ottomotoren wie auch Dieselpartikelfilter halten Partikel zurück. Zur Regenerierung des Partikelfilters, d. h. zum Abbrand von gefilterten Partikeln sind ausreichend hohe Abgastemperaturen und Sauerstoffüberschuss erforderlich. Nach einer Erwärmungsphase steht die erste genannte Voraussetzung an die Abgaseigenschaften in AGR-Systemen von Ottomotoren, mithin ausreichend hohe Abgastemperaturen zur Verfügung. In weiten Betriebsbereichen des Ottomotors, also im gefeuerten Zustand (Lambda = 1 bei stöchiometrisch betriebenen Ottomotoren) mangelt es aber an einem Sauerstoffüberschuss als Grundlage für eine vollständige Verbrennung der Partikel im Partikelfilter. Es werden durch den Abgasstrom also lediglich Partikel dem Partikelfilter zugeführt, dort zu einem Teil mit dem verfügbaren Restsauerstoff verbrannt und zum anderen Teil dort zurückgehalten, bis ausreichend gute Abbrandbedingungen für den vollständigen Abbrand zur Verfügung stehen. Eine Regeneration, mithin eine Verbrennung der Partikel kann nur in Schubphasen des Motors erfolgen, wenn die Einspritzung abgeschaltet ist. In dieser Schubphase, also bei weiterhin drehendem Motor sowie Ein-und Auslassventilbetätigung, gelangt Sauerstoff bei geöffnetem AGR-Ventil in das AGR-System und durchströmt den dort integrierten Partikelfilter. Bei ausreichender Temperatur im Partikelfilter werden die Partikel dann zu CO2 verbrannt. Unter Umständen entsteht auch CO, HC und/oder NOx.

Im Schubbetrieb sind die AGR-Ventile beim Ottomotor üblicherweise geschlossen, um bei einer erneuten Lastanforderung durch den Fahrer bzw. bei Erreichen der Leerlaufdrehzahl des Motors durch eine möglichst geringe Restgasmenge die unmittelbar zu erfolgende Zündung des Motors nicht zu gefährden.

Um jedoch eine Regenerierung des Partikelfilters in der AGR-Leitung zu ermöglichen, ist zum Beispiel im Schubbetrieb das Öffnen des AGR-Ventils erforderlich. Somit strömt Abgas mit hohem Sauerstoffanteil durch den Partikelfilter und dieser regeneriert. Diese Regeneration hält solange an, bis die Partikel bzw. das Abgas durch die kühlere Luft im Schubbetrieb die für die Regeneration erforderliche minimale Temperatur unterschreitet. Spätestens zu diesem Zeitpunkt könnte dann das AGR-Ventil zur Gewährleistung des zu erfolgenden Wiederstarts der motorischen Verbrennung geschlossen werden. Wann eine erneute Lastanforderung durch den Fahrer erfolgt, ist aber nicht bekannt.

Durch die erfindungsgemäße Bypass-Leitung ist eine Regeneration des Partikelfilters in der AGR Leitung auch bei geschlossenem AGR-Ventil möglich. Die Bypass-Leitung zweigt nach dem Partikelfilter ab und mündet bei Verwendung eines Turboladers nach dem Turbinenaustritt in der Abgasleitung.

Beim Öffnen der Bypass-Leitung wird der durch die Abgasturbine geführte Teil des Abgasstroms reduziert. Dies ist insbesondere der Fall, wenn der Druckabfall über den Turbolader größer ist als der über die AGR-Bypass-Strecke. Ein entsprechender Teil des Abgasstroms kann bei geschlossener AGR-Leitung durch den Partikelfilter und die Bypass-Leitung geführt werden. Somit wird die Regeneration des Partikelfilters auch in Phasen mit geschlossenem AGR-Ventil, beispielsweise im Schubbetrieb, begünstigt.

Zudem kann im Vergleich zum alleinigen Durchströmen des geöffneten AGR-Ventils der durch den Partikelfilter geführte sauerstoffreiche Abgasstrom deutlich gesteigert und die Regeneration intensiviert werden.

Damit ist es nicht mehr erforderlich, die Regeneration des Partikelfilters vor dem erneuten Start des Motors zu unterbinden. Die Regeneration kann genauso so lange dauern, wie es für eine Regenerationsphase im Schubtrieb eines im Hauptabgasstrom eingebauten Partikelfilters erforderlich ist. Die somit ermöglichte Regeneration kann in Ihrer Effektivität diejenige eines stromab im Hauptabgasstrom eingebauten Partikelfilters sogar übertreffen, da mit der motornahen, parallel zum Turbolader geführten Einbausituation eine höhere thermische Beaufschlagung des Partikelfilters erfolgt. Dadurch ist die Temperatur der Partikel im Partikelfilter, zum Beispiel in der Phase der Schubabschaltung höher und die Regeneration intensiver.

Über diese verbesserte Regeneration des Partikelfilters hinaus gehen noch weitere Vorteile mit der erfindungsgemäßen Bypass-Leitung einher.

Durch die zusätzlich zuschaltbare Bypass-Leitung wird ein Teil des Abgases an der Abgasturbine vorbei geleitet. Somit übernimmt die Bypass-Leitung auch die Funktion eines Wastegate-Ventils, wie es bei konventionellen Turboladern im Gehäuse der Turbine bislang integriert ist. Somit ist die Bypass-Leitung nicht nur im Schubfall, sondern auch im höheren Lastbetrieb, wie unter Hochlastbedingungen des Ottomotors verwendbar, wenn die Abgasenergie die notwendige Antriebsenergie für den Verdichter des Abgasturboladers übersteigt. Auch in diesem Fall kann aufgrund des im Abgas enthaltenen Restsauerstoffs und der hohen Abgastemperatur der Partikelfilter regeneriert werden. Selbstverständlich ist es auch möglich aber nicht notwendig, die zusätzlich zuschaltbare Bypass-Leitung in Kombination mit einem Turbolader mit Wastegatefunktion anzuwenden.

Darüber hinaus gehen noch weitere Vorteile mit der erfindungsgemäßen Bypass-Leitung, insbesondere in der Start- bzw. Kaltstartphase des Motors, einher.

Die Bypass-Leitung kann auch im Fall des Motorstarts geöffnet werden. Während und nach dem Motorstart bzw. Motorkaltstart ist die Aufladefunktion des Turboladers noch nicht gegeben, da die Abgasenergie hierzu in diesen Betriebspunkten zu niedrig ist. Im Gegenteil: Die Abgasturbine stellt einen Strömungswiderstand dar, der den Motorbetrieb beeinträchtigt. Daher kann im Bedarfsfall der Abgasstrom über den Partikelfilter der AGR-Strecke und die Bypass-Leitung an der Turbine vorbei geleitet werden. In dem Fall eines beschichteten Partikelfilters in der AGR-Strecke werden so motornah nicht nur Partikel zurückgehalten, sondern auch durch das hier wärmere Motorabgas ein früheres Ansprechen der Beschichtung auf dem Partikelfilter und damit eine frühere Konvertierung von unverbrannten Verbrennungsprodukten erreicht. Der Strömungswiderstand der Abgasturbine kann durch eine geeignete Maßnahme, z. B. eine weitere regelbare Abgasklappe, in der Hauptabgasanlage vor Einleitung des Bypassstromes beeinflusst werden.

Ergänzend zu der für die Regeneration benötigten Luftmenge kann es erforderlich sein, die Abgastemperatur gezielt zu erhöhen, um die für die Regeneration erforderliche Abgastemperatur zu erreichen. Hierzu kommen folgende im Stand der Technik bekannte Maßnahmen wie eine Zündzeitpunktspätverstellung, eine Lastpunktverschiebung oder ein Zuheizen in Frage.

Die erfindungsgemäße Kombination aus Bypass-Leitung inklusive Bypass-Drosselklappe und Abgasrückführungsleitung inklusive AGR-Ventil erlaubt eine unabhängige Steuerung des Abgasvolumenstroms in der Bypass-Leitung einerseits und in der Abgasrückführungsleitung andererseits. Sowohl das AGR-Ventil wie auch die Bypass-Drosselklappe sind unabhängig voneinander steuerbar, so dass der darüber geführte Abgasvolumenstrom entsprechend steuerbar ist.

Somit ist es möglich, die Abgasrückführung im höheren Lastbetrieb und im Schubbetrieb anzuwenden, während im Teillastbetrieb keine Abgasrückführung stattfindet. Im höheren Lastbetrieb kann gleichzeitig zur Abgasrückführung auch die Bypass-Leitung, mithin die Wastegatefunktion erfüllt werden.

Im Zusammenhang mit der erfindungsgemäßen Ausbildung und Anordnung kann es von Vorteil sein, wenn stromab des Partikelfilters ein Kühler innerhalb der Abgasrückführungsleitung vorgesehen ist. Der Kühler ist räumlich bzw. zumindest thermisch vom Partikelfilter getrennt, so dass der Partikelfilter möglichst in weiten motorischen Betriebszuständen hohe Temperaturen aufweist, damit er bei genügend Sauerstoffüberschuss im Abgas durch Oxidation der gefilterten Bestandteile regeneriert. Damit wird ein möglichst großer Arbeitsbereich des Partikelfilters zur Regenerierung erzielt. Der Kühler ist entweder als Abgas-Luft-, als Abgas-Motorkühlwasser- oder als Abgas-Niedertemperaturkühlwasser-Kühler ausgebildet. In besonderen Ausführungsformen können mehrere Kühler der Abgasrückführung, die auch zuschaltbar ausgebildet sein können, in Reihe oder auch parallel angeordnet sein.

Vorteilhaft kann es insbesondere sein, wenn der Kühler ausgangsseitig eine Abgassolltemperatur Ta aufweist, die oberhalb des Taupunktes der im Abgas enthaltenen Substanzen liegt, beispielsweise 250° >= Ta >= 100° oder 250° >= Ta >= 105°. Die Abgassolltemperatur Ta ist dabei so hoch gewählt, dass ein Kondensieren des im Abgas enthaltenen Wassers verhindert wird. Diese Bedingung sollte für einen Großteil der Betriebszustände gelten. Somit kann eine übermäßige Kondensatbildung bzw. Verschmutzung des AGR-Systems verhindert werden. Eine Kühlung auf unter 100°C erfolgt erst in der zweiten Kühlstufe nach Mischung von Abgas und Frischluft in der Einlass- bzw. in der Ladeluftleitung kurz vor Motoreintritt. Hierdurch kann kondensierendes Wasser direkt in den Motorbrennraum gelangen und durch Verdunstung positive Wirkung auf die motorische Verbrennung entfalten. Wie unten ausgeführt besteht aufgrund des Partikelfilters trotz der weiteren Abkühlung der Ladeluft eine wesentlich geringere Versottungsgefahr für den motornahen Ladeluftkühler.

Dabei kann es vorteilhafterweise vorgesehen sein, dass die Einlassleitung stromauf der Mündung der Abgasrückführungsleitung als Frischluftleitung ausgebildet ist und dass zumindest ein Frischluftkühler und eine Frischluft-Drosselklappe in der Frischluftleitung vorgesehen sind. Mittels des Frischluftkühlers kann eine gesonderte Kühlung der Frischluft vor dem Mischen mit dem Abgas erfolgen. Falls das Temperaturniveau der verdichteten Frischluft mit 150 °C bis 160 °C noch nicht so sehr hoch ist, kann die gesonderte Kühlung der Frischluft auch entfallen, wobei dann das Frischluft-Abgasgemisch wie nachgehend beschrieben zusammen gekühlt werden kann.

Zudem kann es vorteilhaft sein, wenn der Frischluftkühler ausgangsseitig eine Frischluftsolltemperatur Tf aufweist mit 150° >= Tf >= 60°. Die im Frischluftsystem erfolgte Kühlleistung ist in jedem Fall vorteilhaft im Hinblick auf ein möglichst kühles Frischluft-Abgasgemisch.

Vorteilhaft kann es auch sein, wenn die Einlassleitung stromab der Mündung der Abgasrückführungsleitung als Ladeluftleitung ausgebildet ist und wenn zumindest ein Ladeluftkühler in der Ladeluftleitung vorgesehen ist. Die Reinigung des zurückgeführten Abgases durch den Partikelfilter gewährleistet den effektiven Einsatz des Ladeluftkühlers für das Frischluft-Abgas Gemisch. Ein Versotten des Ladeluftkühlers wird aufgrund des Einsatzes des Partikelfilters wirksam verringert. Der Effekt, dass durch den Partikelfilter in der AGR-Leitung Rußpartikel und durch die AGR die Abgastemperatur im Hochlastbetrieb deutlich reduziert werden können, kann durch die intensivere AGR- und Ladeluft-Kühlung soweit verstärkt werden, dass die Ansaugtemperatur vor Zylindereintritt auf das Niveau von Ottomotoren ohne AGR sinken kann. Hierdurch sinkt die Klopfneigung des Ottomotors deutlich und es sind signifikante Verbrauchsverbesserungen erzielbar. Dies wird durch die zwei- bzw. dreistufige Kühlung der angesaugten Ladeluft durch den AGR-Kühler, den Ladeluftkühler und ggf. den Frischluftkühler unter Anwendung der unterschiedlichen Temperaturniveaus erreicht.

Die Abzweigung der AGR-Leitung stromauf der Turbine gewährleistet höhere Abgastemperaturen, die sich insgesamt positiv auf die Partikelfilterregeneration und die Schadstoffreduktion auswirken. Die Mündung stromab des Verdichters hat den Vorteil, dass die Regelstrecke kürzer ist. Diese Kombination aus Abzweigung stromauf der Turbine und Mündung stromab des Verdichters wird als Hochdruck-AGR (HD-AGR) bezeichnet. Allerdings steht möglicherweise nicht in allen gewünschten Betriebszuständen ein ausreichend hohes Druckgefälle zwischen Abgassystem und Ansaugsystem für die Zuführung der gewünschten rückgeführten Abgasmenge zur Verfügung. Für den Fall, dass eine zusätzliche Kühlung des zurückgeführten Abgases gefordert ist, kann das gereinigte Abgas auch nach dem Verdichter und vor dem Ladeluftkühler dem Ansaugsystem zugeführt werden. Damit wird das Abgas nicht nur im AGR-Kühler, sondern zusätzlich auch im Ladeluftkühler gekühlt. Denkbar ist auch eine Anordnung, in der der Ladeluftkühler so effektiv ausgelegt ist, dass für das rückgeführte Abgas kein AGR-Kühler in der AGR-Leitung erforderlich ist.

Die Abzweigung stromauf der Turbine in Kombination mit der Mündung stromauf des Verdichters wird als Maximaldruck-AGR (MD-AGR) bezeichnet und gewährleistet eine große Druckdifferenz innerhalb der AGR-Leitung auch für größere geforderte Abgasrückführungsmengen. Allerdings wird dadurch die Regelstrecke länger als bei der HD-AGR und der Verdichter und die Turbine müssen an die veränderten Massendurchsätze ggf. angepasst werden.

Die Abzweigung stromab der Turbine in Kombination mit der Mündung stromauf des Verdichters wird als Niederdruck-AGR (ND-AGR) bezeichnet.

Hierzu kann es vorteilhaft sein, wenn der Ladeluftkühler ausgangsseitig eine Ladeluftsolltemperatur Tu aufweist mit Tu <= 60°. Durch die intensive Kühlung der Ladeluft kann die Abgastemperatur des Ottomotors auf das Niveau von Dieselmotoren (etwa 850°C) gesenkt werden. Dies wirkt sich sehr positiv auf die Klopfneigung des Ottomotors aus und es sind signifikante Verbesserungen im Kraftstoffverbrauch möglich. Die minimal erreichbare Ladeluftsolltemperatur Tu ist immer abhängig von der Temperatur des zur Kühlung anwendbaren Kühlmittels, also der Umgebungsluft oder des Motorkühlwassers. Die minimal erreichbare Ladeluftsolltemperatur Tu liegt physikalisch bedingt stets oberhalb der Temperatur des Kühlmittels.

Vorteilhaft kann es ferner sein, wenn ein AGR-Ventil in der Abgasrückführungsleitung vorgesehen ist, über das betriebspunktabhängig ein Abgasmassenstrom innerhalb der Abgasrückführungsleitung einstellbar ist. Das AGR-Ventil ist vorteilhafterweise stromab des Partikelfilters platziert. In Schubphasen des Motors kann mit dem AGR-Ventil die Regeneration des Partikelfilters über die Menge der rückgeführten Frischluftmenge beeinflusst werden. Eine Positionierung vor dem Partikelfilter führt zu erhöhter Verschmutzung des AGR-Ventils und kommt nur in Ausnahmefällen in Betracht. Außerdem kann es vorteilhaft sein, wenn das AGR-Ventil stromab des Kühlers vorgesehen ist. Somit wird diese vor übermäßiger Temperaturbelastung geschützt.

Vorteilhaft kann es auch sein, wenn eine Bypass-Drosselklappe in der Bypass-Leitung vorgesehen ist, über die betriebspunktabhängig ein Abgasmassenstrom innerhalb der Bypass-Leitung einstellbar ist.

Vorteilhaft kann es ferner sein, wenn eine weitere Abgasrückführungsleitung mit einem weiteren AGR-Ventil vorgesehen ist, die an der Abgasrückführungsleitung abzweigt oder die an der Bypass-Leitung abzweigt, wobei die weitere Abgasrückführungsleitung in der Einlassleitung stromauf des Verdichters mündet.

Somit kann alternativ zur AGR-Leitung die weitere AGR-Leitung Anwendung finden. Es können auch beide AGR-Leitungen zusammen Anwendung finden.

Da das rückzuführende Abgas vor dem Katalysator des Abgassystems entnommen wird, kann anstelle eines beschichteten Partikelfilters ein zusätzlicher 3-Wege-Katalysator oder auch ein Oxidationskatalysator in der Abgasrückführungsleitung integriert werden. Diese Katalysatoren stellen jedoch eine weitere Bauteilkomponente dar, die alternativ mit einem katalytisch beschichteten Partikelfilter vermeidbar ist. In jedem Fall führt die Oxidation von Schadstoffkomponenten zur Wärmeentwicklung und damit zur Aufheizung des stromab liegenden Partikelfilters. Dies erweitert den Einsatz der eigenständigen Regeneration des Partikelfilters im Schubbetrieb auf weitere Betriebszustände.

Zudem kann vorgesehen sein eine **Einrichtung zum Einbringen** von Sekundärluft, über die Sekundärluft in die Abgasrückführungsleitung und/oder in die Bypass-Leitung **einbringbar ist.** Die Sekundärluft kann auch in die Abgasleitung stromauf der Abgasrückführungsleitung und/oder stromauf der Bypass-Leitung eingebracht werden. Ein Einsatz von Sekundärluft, mit der die Abgasleitung und somit der Partikelfilter mit zusätzlichem Sauerstoff für die Regeneration versorgt werden, kann auch vorteilhaft sein. Hierbei ist aber darauf zu achten, dass der zusätzliche Luftstrom auch tatsächlich durch den Partikelfilter geführt wird. Daher sollte beim Einsatz der Sekundärluftpumpe das AGR-Ventil geöffnet sein. Zusätzlich oder alternativ kann auch die Bypass-Leitung geöffnet sein. Bei geschlossenem AGR-Ventil muss die Bypass-Leitung jedoch geöffnet sein. Die Sekundärluft kann über eine gesonderte Sekundärluftpumpe oder mittels des Ladeluftverdichters bereitgestellt werden, sofern die vorhandenen Druckniveaus dies gewährleisten. Je nach Anforderung kann dieser Abgasstrom der Bypass-Leitung entweder vor oder nach dem Katalysator der Abgasanlage zugeführt werden.

Gelöst wird die Aufgabe auch durch eine Abgasanlage und/oder einen Ottomotor mit einem Abgasleitsystem wie vorgehend beschrieben.

Gelöst wird die Aufgabe auch durch ein Verfahren zum Betrieb eines Ottomotors mit einem Abgasleitsystem oder einer Abgasanlage wie vorgehend beschrieben, bei dem
a) im Betrieb bzw. im Schubbetrieb des Ottomotors bei zumindest teilweise geschlossenem AGR-Ventil zumindest ein Teil des Abgasstroms durch den Partikelfilter und durch die zumindest teilweise geöffnete Bypass-Leitung geführt wird, wobei eine Regeneration des Partikelfilters ausgeführt bzw. ermöglicht wird;
b) während und nach dem Start des Ottomotors bei zumindest teilweise geschlossenem AGR-Ventil durch Öffnen der Bypass-Drosselklappe zumindest ein Teil des Abgasstroms durch den Partikelfilter und durch die Bypass-Leitung an der Turbine vorbei geführt wird, bis ein vorgegebener Zustand wie ein vorgegebener Abgasdruck erreicht ist und die Schließung der Bypassleitung erfordert;
c) im höheren Lastbetrieb, mithin im Volllastbetrieb oder im Hochlastbetrieb des Ottomotors die Bypass-Leitung als Wastegate verwendet wird zum Leiten von zumindest einem Teil des Abgasstroms an der Turbine vorbei, wobei hierdurch eine Regeneration des Partikelfilters ausgeführt bzw. ermöglicht wird. Das AGR-Ventil kann dabei zumindest teilweise oder ganz geöffnet sein.

Durch Anwendung der erfindungsgemäßen Bypass-Leitung kann das Motorverhalten bzw. die Schadstoffemission in verschiedenen Betriebspunkten deutlich verbessert werden.

Vorteilhaft kann es hierzu sein, wenn beim Einbringen von Sekundärluft durch die Einrichtung
a) das AGR-Ventil geöffnet wird und wahlweise ergänzend Abgas durch die Bypass-Leitung geführt wird, wobei die Bypass-Drosselklappe zumindest teilweise geöffnet ist oder
b) das AGR-Ventil geschlossen wird und alternativ Abgas durch die Bypass-Leitung geführt wird, wobei die Bypass-Drosselklappe zumindest teilweise geöffnet ist. Der zusätzlich eingebrachte Massestrom kann über die Bypass-Leitung oder die AGR-Leitung abgeführt werden. Im zuletzt genannten Fall ist eine verbesserte Regeneration des Partikelfilters gewährleistet.

### Ferner kann es vorteilhaft sein, wenn die Sekundärlufteinblasung auch in die AGR-Leitung eingebracht werden kann.

Weitere Vorteile und Einzelheiten der Erfindung sind in den Patentansprüchen und in der Beschreibung erläutert und in den Figuren dargestellt. Es zeigen:
- Figur 1: eine Prinzipskizze einer HD-AGR mit Bypass-Leitung;
- Figur 2: eine Prinzipskizze einer MD-AGR mit Bypass-Leitung;
- Figur 3: Prinzipskizze einer kombinierten HD- und MD-AGR mit Bypass-Leitung.

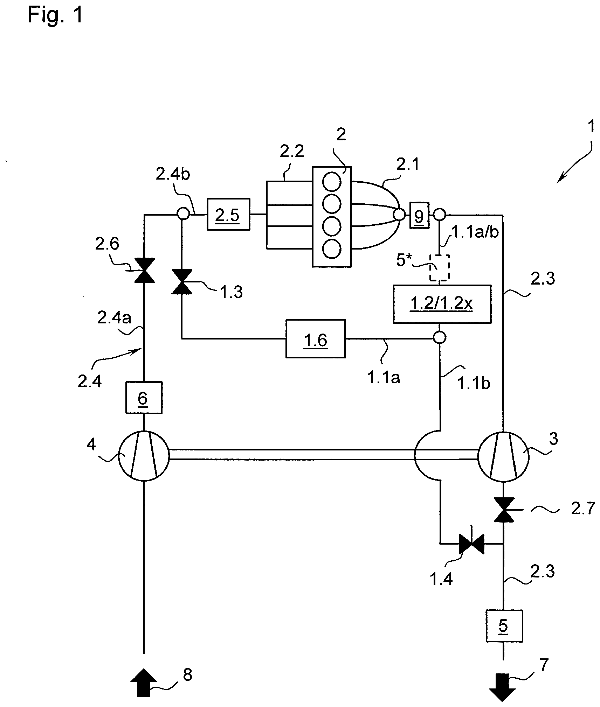

In allen Prinzipskizzen nach den Fig. 1 - 3 ist dargestellt ein Abgasleitsystem 1 (AGR-System), das in das Abgas- und Ladeluftsystem eines Ottomotors 2 mit Auslasskrümmer 2.1 und Einlasskrümmer 2.2 sowie mit Abgasturbine 3 und Ladeluftverdichter 4 integriert ist. Das Abgas- und Ladeluftsystem weist eine an den Auslasskrümmer 2.1 des Ottomotors 2 angeschlossene Abgasleitung 2.3 auf, in die die Turbine 3 integriert ist. Am Ende der Abgasleitung 2.3 verlässt Abgas 7 das Abgasleitsystem 1 und strömt in die weitere, nicht dargestellte Abgasstrecke. Zudem ist eine an den Einlasskrümmer 2.2 des Ottomotors 2 angeschlossene Einlassleitung 2.4 vorgesehen, in die der Verdichter 4 integriert ist. Die Einlassleitung 2.4 wird über ein nicht dargestelltes Luftzuführsystem mit Frischluft 8 versorgt. Ergänzend ist mindestens eine Abgasrückführungsleitung 1.1a (AGR-Leitung) mit einem AGR-Ventil 1.3 vorgesehen, die an der Abgasleitung 2.3 abzweigt und in der Einlassleitung 2.4 mündet. Stromab der Turbine 3 und stromauf der Mündung einer Bypass-Leitung 1.1b ist optional nach Figur 1 eine Abgasklappe 2.7 vorgesehen, über die der Strömungswiderstand der Abgasturbine 3 beeinflusst werden kann.

Ergänzend hierzu ist die Bypass-Leitung 1.1b vorgesehen, die ebenfalls an der Abgasleitung 2.3 abzweigt und stromab der Turbine 3 in der Abgasleitung 2.3 mündet. Hierbei ist es unerheblich, ob die Bypass-Leitung 1.1b an der Abgasrückführungsleitung 1.1a abzweigt oder ob die Abgasrückführungsleitung 1.1a an der Bypass-Leitung 1.1b abzweigt. Die Bypass-Leitung 1.1b weist eine Bypass-Drosselklappe 1.4 zum Regulieren des Gasmassestroms auf.

Sowohl das AGR-Ventil 1.3 wie auch die Bypass-Drosselklappe 1.4 ist stromab des Partikelfilter 1.2, 1.2x angeordnet.

In der AGR-Leitung 1.1a ist ein Partikelfilter 1.2, 1.2x angeordnet, der das rückgeführte bzw. rückzuführende Abgas 7 filtert. Der Partikelfilter 1.2x ist erfindungsgemäß beschichtet und erfüllt die Aufgaben eines 3-Wege-Katalysators. Alternativ und nicht erfindungsgemäß kann der Partikelfilter 1.2 auch unbeschichtet sein. In diesem Fall kann ein Abgaskatalysator 5* notwendig werden, der beispielsweise stromauf des Partikelfilters 1.2 platziert ist (gestrichelt dargestellt), um eine katalytische Reinigung des zurückgeführten Abgases 7 zu gewährleisten.

Ferner ist in der AGR-Leitung 1.1a stromab des Partikelfilters 1.2, 1.2x mindestens ein AGR-Kühler 1.6 vorgesehen. Stromab des jeweiligen AGR-Kühlers 1.6 bzw. vor der Mündung in die Einlassleitung 2.4 ist ein AGR-Ventil 1.3 zur Regelung des Massestroms innerhalb der AGR-Leitung 1.1a platziert.

In der Einlassleitung 2.4 ist eine Ladeluft- bzw. Frischluft-Drosselklappe 2.6 stromauf der Einleitungsstelle der Abgasrückführungsleitung 1.1a in die Einlassleitung 2.4 vorgesehen. Dieser Teil der Einlassleitung 2.4 wird auch als Frischluftleitung 2.4a bezeichnet. Innerhalb der Frischluftleitung 2.4a ist zudem ein Lade- bzw. Frischluftkühler 6 vorgesehen.

Stromab der Turbine 3 ist in der Abgasleitung 2.3 ein Katalysator 5 vorgesehen, der als 3-Wege-Katalysator ausgebildet ist.

Ergänzend zum AGR-Kühler 1.6 und zum Frischluftkühler 6 ist in der Einlassleitung 2.4 stromab der Einleitungsstelle der Abgasrückführungsleitung 1.1a ein Ladeluftkühler 2.5 platziert. Dieser Teil der Einlassleitung 2.4 stromab der Einleitungsstelle der Abgasrückführungsleitung 1.1a wird auch als Ladeluftleitung 2.4b bezeichnet.

Zudem ist abgasseitig eine Einrichtung 9 zum Einbringen von Sekundärluft im Zylinderkopf bzw. im Auslasskrümmer 2.1 oder in der Abgasleitung 2.3 vorgesehen.

Grundsätzlich unterscheidet man zwischen drei Varianten der Abgasrückführung, in Abhängigkeit der Abzweigung der AGR-Leitung 1.1a von der Abgasleitung 2.3 und Mündung der AGR-Leitung 1.1a in der Einlassleitung 2.4.

Die Kombination aus Abzweigung der AGR-Leitung 1.1a stromauf der Turbine 3 und Mündung der AGR-Leitung 1.1a stromab des Verdichters 4 wird als Hochdruck-AGR (HD-AGR) bezeichnet.

Die Kombination aus Abzweigung der AGR-Leitung 1.1a stromauf der Turbine 3 und Mündung der AGR-Leitung 1.1a stromauf des Verdichters 4 wird als Maximaldruck-AGR (MD-AGR) bezeichnet.

Die Kombination aus Abzweigung der AGR-Leitung 1.1a stromab der Turbine 3 und Mündung stromauf des Verdichters 4 wird als Niederdruck-AGR (ND-AGR) bezeichnet.

Im Schaubild nach Fig. 1 ist eine HD-AGR dargestellt, gebildet durch die AGR-Leitung 1.1a, die stromauf der Turbine 3 abzweigt und die stromab des Verdichters 4 mündet. Die Mündung erfolgt stromab der Ladeluft- bzw. Frischluft-Drosselklappe 2.6.

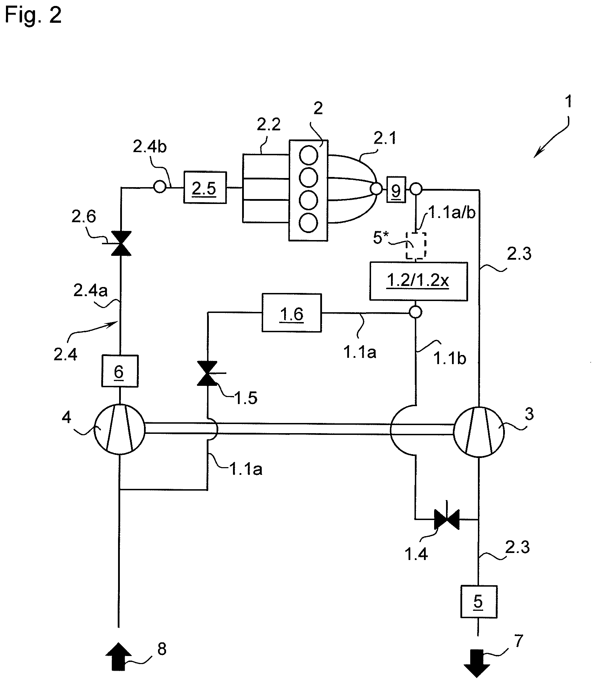

Nach Figur 2 ist eine MD-AGR ausgebildet.

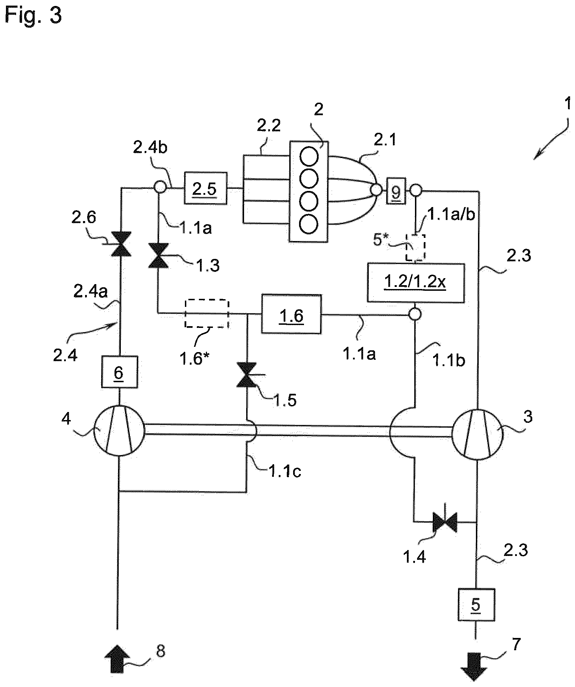

Im Ausführungsbeispiel nach Figur 3 sind eine HD-AGR und eine MD-AGR kombiniert. An der Bypass-Leitung 1.1b zweigt stromab des Kühlers 1.6 eine zusätzliche AGR-Leitung 1.1c mit einem weiteren AGR-Ventil 1.5 ab. In der AGR-Leitung 1.1c ist ein zusätzliches AGR-Ventil 1.5 vorgesehen. Die AGR-Leitung 1.1c mündet in der Einlassleitung 2.4 stromauf des Verdichters 4. Ein AGR-Kühler 1.6* kann alternativ auch stromab der Abzweigung für die weitere AGR-Leitung 1.1c positioniert sein.

### Bezugszeichenliste

- 1: Abgassystem / Abgasleitsystem
- 1.1a: Abgasrückführungsleitung, AGR-Leitung
- 1.1a/b: AGR-Leitung / Bypass-Leitung
- 1.1b: Bypass-Leitung
- 1.1c: weitere Abgasrückführungsleitung, AGR-Leitung
- 1.2: Partikelfilter
- 1.2x: Partikelfilter, beschichtet
- 1.3: AGR-Ventil
- 1.4: Bypass-Drosselklappe von 1.1b
- 1.5: weiteres AGR-Ventil
- 1.6: Kühler, AGR-Kühler
- 1.6*: Kühler alternative Position
- 2: Ottomotor
- 2.1: Auslasskrümmer
- 2.2: Einlasskrümmer
- 2.3: Abgasleitung
- 2.4: Einlassleitung
- 2.4a: Frischluftleitung
- 2.4b: Ladeluftleitung
- 2.5: Ladeluftkühler
- 2.6: Ladeluft-Drosselklappe, Frischluft-Drosselklappe
- 2.7: Abgasklappe
- 3: (Abgas-) Turbine
- 4: Verdichter, Ladeluftverdichter
- 5: Katalysator, 3-Wege-Katalysator, Oxidationskatalysator
- 5*: Abgaskatalysator, 3-Wege- bzw. Oxidationskatalysator, alternativ
- 6: Ladeluftkühler, Frischluftkühler
- 7: Abgas
- 8: Frischluft
- 9: Einrichtung zum Einbringen von Sekundärluft

## Patentansprüche

1. Abgasleitsystem (1) für einen Ottomotor (2) mit einer an einen Auslasskrümmer (2.1) des Ottomotors (2) anschließbaren Abgasleitung (2.3), mit einer an einen Einlasskrümmer (2.2) des Ottomotors (2) anschließbaren Einlassleitung (2.4) und mit einer in der Abgasleitung (2.3) angeordneten Turbine (3), wobei mindestens eine Abgasrückführungsleitung (1.1a, 1.1c) mit einem AGR-Ventil (1.3) vorgesehen ist, die in der Einlassleitung (2.4) mündet, und die Abgasleitung (2.3) mindestens eine Bypass-Leitung (1.1b) mit einer Bypass-Drosselklappe (1.4) aufweist, die stromab der Turbine (3) in die Abgasleitung (2.3) mündet, wobei
a) die Abgasrückführungsleitung (1.1a) stromauf der Turbine (3) abzweigt und die Bypass-Leitung (1.1b) an der Abgasrückführungsleitung (1.1a) abzweigt oder
b) die Bypass-Leitung (1.1b) stromauf der Turbine (3) abzweigt und die Abgasrückführungsleitung (1.1a) an der Bypass-Leitung (1.1b) abzweigt, wobei
c) in der Abgasrückführungsleitung (1.1a) oder in der Bypass-Leitung (1.1b) stromauf der Abgasrückführungsleitung (1.1a) oder in der Abgasleitung (2.3) stromauf der Abgasrückführungsleitung (1.1a) mindestens ein Partikelfilter (1.2, 1.2x) angeordnet ist, wobei zwecks höheren Lastbetriebs des Ottomotors die Bypass-Leitung (1.1b) und gleichzeitig die Abgasrückführungsleitung (1.1a) mit Abgas beaufschlagbar sind, **dadurch gekennzeichnet, dass** der mindestens eine Partikelfilter (1.2) eine katalytisch wirkende Beschichtung zur Umwandlung von CO, HC und NOx aufweist und stromab der Turbine (3) ein als 3-Wege-Katalysator ausgebildeter Abgaskatalysator (5) vorgesehen ist, wobei die Bypass-Leitung (1.1b) stromauf des Abgaskatalysators (5) mündet.

2. Abgasleitsystem (1) nach Anspruch 1,
**dadurch gekennzeichnet,**
**dass** stromab des Partikelfilters (1.2, 1.2x) ein Kühler (1.6) innerhalb der Abgasrückführungsleitung (1.1a)vorgesehen ist.

3. Abgasleitsystem (1) nach Anspruch 2,
**dadurch gekennzeichnet,**
**dass** der Kühler (1.6) ausgangsseitig eine Abgassolltemperatur Ta aufweist, die oberhalb des Taupunktes der im Abgas enthaltenen Substanzen liegt.

4. Abgasleitsystem (1) nach einem der vorhergehenden Ansprüche,
**dadurch gekennzeichnet,**
**dass** die Einlassleitung (2.4) stromauf der Mündung der Abgasrückführungsleitung (1.1a)als Frischluftleitung (2.4a) ausgebildet ist und dass zumindest ein Frischluftkühler(6) und eine Frischluft-Drosselklappe (2.6) in der Frischluftleitung (2.4a) vorgesehen sind.

5. Abgasleitsystem (1) nach Anspruch 4,
**dadurch gekennzeichnet,**
**dass** der Frischluftkühler (6) ausgangsseitig eine Frischluftsolltemperatur Tf aufweist mit 150° >= Tf >= 60°.

6. Abgasleitsystem (1) nach einem der vorhergehenden Ansprüche,
**dadurch gekennzeichnet,**
**dass** die Einlassleitung (2.4) stromab der Mündung der Abgasrückführungsleitung (1.1a) als Ladeluftleitung (2.4b) ausgebildet ist und dass zumindest ein Ladeluftkühler (2.5) in der Ladeluftleitung (2.4b) vorgesehen ist.

7. Abgasleitsystem (1) nach Anspruch 6,
**dadurch gekennzeichnet,**
**dass** der Ladeluftkühler (2.5) ausgangsseitig eine Ladeluftsolltemperatur Tu aufweist mit Tu <= 60°.

8. Abgasleitsystem (1) nach einem der vorhergehenden Ansprüche,
**dadurch gekennzeichnet,**
**dass** über das AGR-Ventil (1.3) in der Abgasrückführungsleitung (1.1a) betriebspunktabhängig ein Abgasmassenstrom innerhalb der Abgasrückführungsleitung (1.1a) einstellbar ist.

9. Abgasleitsystem (1) nach einem der vorhergehenden Ansprüche,
**dadurch gekennzeichnet,**
**dass** über die Bypass-Drosselklappe (1.4) in der Bypass-Leitung (1.1b) betriebspunktabhängig ein Abgasmassenstrom innerhalb der Bypass-Leitung (1.1b) einstellbar ist.

10. Abgasleitsystem (1) nach einem der vorhergehenden Ansprüche,
**dadurch gekennzeichnet,**
**dass** eine weitere Abgasrückführungsleitung (1.1c) mit einem weiteren AGR-Ventil (1.5) vorgesehen ist, die an der Abgasrückführungsleitung (1.1a) abzweigt oder die an der Bypass-Leitung (1.1b) abzweigt, wobei die weitere Abgasrückführungsleitung (1.1c) in der Einlassleitung (2.4) stromauf eines Verdichters (4) mündet.

11. Abgasleitsystem (1) nach einem der vorhergehenden Ansprüche,
**dadurch gekennzeichnet,**
**dass** eine Einrichtung (9) zum Einbringen von Sekundärluft vorgesehen ist, über die Sekundärluft in die Abgasrückführungsleitung (1.1a) und/oder in die Bypass-Leitung (1.1b) einbringbar ist.

12. Abgasanlage und/oder Ottomotor (2) mit einem Abgasleitsystem (1) nach einem der vorhergehenden Patentansprüche.

13. Verfahren zum Betrieb eines Ottomotors (2) mit einem Abgasleitsystem (1) oder einer Abgasanlage nach einem der vorhergehenden Ansprü**che, dadurch gekennzeichnet, dass**
a) im Betrieb des Ottomotors (2) bei zumindest teilweise offenem AGR-Ventil (1.3) zumindest ein Teil des Abgasstroms durch den Partikelfilter (1.2, 1.2x) und durch die Bypass-Leitung (1.1b) geführt wird, wobei eine Regeneration des Partikelfilters (1.2, 1.2x) ausgeführt wird;
b) während und nach dem Start des Ottomotors (2) bei zumindest teilweise geschlossenem AGR-Ventil (1.3) durch Öffnen der Bypass-Drosselklappe (1.4) zumindest ein Teil des Abgasstroms durch den Partikelfilter (1.2, 1.2x) und durch die Bypass-Leitung (1.1b) an der Turbine (3) vorbei geführt wird, bis ein vorgegebener Zustand die Schließung der Bypass-Leitung (1.1b) erfordert.
c) im höheren Lastbetrieb des Ottomotors (2) oder zumindest volllastnah die Bypass-Leitung (1.1b) als Wastegate verwendet wird zum Leiten von zumindest einem Teil des Abgasstroms an der Turbine (3) vorbei, wobei eine Regeneration des Partikelfilters (1.2, 1.2x) ausgeführt wird.

14. Verfahren nach Anspruch 13,
**dadurch gekennzeichnet,**
**dass** beim Einbringen von Sekundärluft durch die Einrichtung (9)
a) das AGR-Ventil (1.3) geöffnet wird und wahlweise ergänzend Abgas (7) durch die Bypass-Leitung (1.1b) geführt wird oder
b) das AGR-Ventil (1.3) geschlossen wird und alternativ Abgas (7) durch die Bypass-Leitung (1.1b) geführt wird.

15. Verfahren nach Anspruch 13 oder 14,
**dadurch gekennzeichnet,**
**dass** die Sekundärlufteinblasung auch in die AGR-Leitung (1.1a/b) eingebracht werden kann.

## Claims

1. An exhaust gas guiding system (1) for a spark-ignition engine (2) having an exhaust line (2.3) connectable to an exhaust manifold (2.1) of the spark-ignition engine (2), having an intake line (2.4) connectable to an intake manifold (2.2) of the spark-ignition engine (2), and having a turbine (3) arranged in the exhaust line (2.3),
wherein at least one exhaust gas recirculation line (1.1a, 1.1c) having an EGR valve (1.3) is provided, said recirculation line discharging into the intake line (2.4), and the exhaust line (2.3) has at least one bypass line (1.1b) having a bypass throttle valve (1.4) and discharging into the exhaust line (2.3) downstream of the turbine (3),
wherein
a) the exhaust gas recirculation line (1.1a) branches off upstream of the turbine (3), and the bypass line (1.1b) branches off from the exhaust gas recirculation line (1.1a), or
b) the bypass line (1.1b) branches off upstream of the turbine (3), and the exhaust gas recirculation line (1.1a) branches off from the bypass line (1.1b), wherein
c) at least one particle filter (1.2, 1.2x) is arranged in the exhaust gas recirculation line (1.1a) or in the bypass line (1.1b) upstream of the exhaust gas recirculation line (1.1a) or in the exhaust line (2.3) upstream of the exhaust gas recirculation line (1.1a),
wherein, for the purpose of a higher load operation of the spark-ignition engine, the bypass line (1.1b) and simultaneously the exhaust gas recirculation line (1.1a) can be supplied with exhaust gas, **characterized in that** the at least one particle filter (1.2) has a catalytically acting coating for converting CO, HC and NOx, and an exhaust gas catalytic converter (5) designed as a 3-way catalytic converter is provided downstream of the turbine (3), the bypass line (1.1b) discharging upstream of the exhaust gas catalytic converter (5).

2. The exhaust gas guiding system (1) according to Claim 1,
**characterized in that**
a cooler (1.6) is provided downstream of the particle filter (1.2, 1.2x) within the exhaust gas recirculation line (1.1a).

3. The exhaust gas guiding system (1) according to Claim 2,
**characterized in that**
the cooler (1.6) has, on the outlet side, an exhaust gas target temperature Ta, which is above the dew point of the substances contained in the exhaust gas.

4. The exhaust gas guiding system (1) according to any one of the preceding Claims,
**characterized in that**
upstream of the discharging point of the exhaust gas recirculation line (1.1a), the intake line (2.4) is designed as a fresh air line (2.4a), and **in that** at least one fresh air cooler (6) and one fresh air throttle valve (2.6) are provided in the fresh air line (2.4a).

5. The exhaust gas guiding system (1) according to Claim 4,
**characterized in that**
the fresh air cooler (6) has, on the outlet side, a fresh air target temperature Tf where 150° >= Tf >= 60°.

6. The exhaust gas guiding system (1) according to any one of the preceding Claims,
**characterized in that**
downstream of the discharging point of the exhaust gas recirculation line (1.1a), the intake line (2.4) is designed as a charge-air line (2.4b), and at least one charge-air cooler (2.5) is provided in the charge-air line (2.4b).

7. The exhaust gas guiding system (1) according to Claim 6,
**characterized in that**
the charge-air cooler (2.5) has, on the outlet side, a charge-air target temperature Tu where Tu <= 60°.

8. The exhaust gas guiding system (1) according to any one of the preceding Claims,
**characterized in that**
the mass flow rate of exhaust gas within the exhaust gas recirculation line (1.1a) can be adjusted by the EGR valve (1.3) in the exhaust gas recirculation line (1.1a) depending on the operating point.

9. The exhaust gas guiding system (1) according to any one of the preceding Claims,
**characterized in that**
the mass flow rate of exhaust gas within the bypass line (1.1b) can be adjusted by the bypass throttle valve (1.4) in the bypass line (1.1b) depending on the operating point.

10. The exhaust gas guiding system (1) according to any one of the preceding Claims,
**characterized in that**
a further exhaust gas recirculation line (1.1c) having a further EGR valve (1.5) is provided, said further exhaust gas recirculation line branching off from the exhaust gas recirculation line (1.1a) or branching off from the bypass line (1.1b), wherein said further exhaust gas recirculation line (1.1c) discharges into the intake line (2.4) upstream of a compressor (4).

11. The exhaust gas guiding system (1) according to any one of the preceding Claims,
**characterized in that**
a device (9) for introducing secondary air is provided, by which secondary air is able to be introduced into the exhaust gas recirculation line (1.1a) and/or into the bypass line (1.1b).

12. An exhaust gas system and/or spark-ignition engine (2) comprising an exhaust gas guiding system (1) according to any one of the preceding Claims.

13. A method for operating a spark-ignition engine (2) having an exhaust gas guiding system (1) or an exhaust gas system according to any one of the preceding Claims,
**characterized in that**
a) during operation of the spark-ignition engine (2) with the EGR valve (1.3) at least partially open, at least some of the exhaust gas flow is fed through the particle filter (1.2, 1.2x) and through the bypass line (1.1b), wherein a regeneration of the particle filter (1.2, 1.2x) is carried out;
b) during and after the start-up of the spark-ignition engine (2) with the EGR valve (1.3) at least partially closed, by opening the bypass throttle valve (1.4) at least some of the exhaust gas flow is fed through the particle filter (1.2, 1.2x) and through the bypass line (1.1b) past the turbine (3) until a predetermined state requires the bypass line (1.1b) to be closed;
c) in a higher load operation of the spark-ignition engine (2) or at least close to full load, the bypass line (1.1b) is used as a waste gate for guiding at least some of the exhaust gas flow past the turbine (3), wherein a regeneration of the particle filter (1.2, 1.2x) is carried out.

14. The method according to Claim 13,
**characterized in that**
when secondary air is introduced by the device (9),
a) the EGR valve (1.3) is opened and, optionally, exhaust gas (7) is additionally fed through the bypass line (1.1b), or
(b) the EGR valve (1.3) is closed and, alternatively, exhaust gas (7) is fed through the bypass line (1.1b).

15. The method according to Claim 13 or 14,
**characterized in that**
the injection of secondary air can also be introduced into the EGR line (1.1a/b).

## Revendications

1. Système d'évacuation de gaz d'échappement (1) d'un moteur à essence (2) avec une tubulure d'échappement (2.3) raccordable à un tuyau d'échappement (2.1) du moteur à essence (2), avec une tubulure d'admission (2.4) raccordable à un tuyau d'admission (2.2) du moteur à essence (2) et avec une turbine (3) disposée dans la tubulure d'échappement (2.3),
dans lequel au moins une tubulure de recirculation des gaz d'échappement (1.1a, 1.1c) est prévue avec une soupape RGE (1.3), qui débouche dans la tubulure d'admission (2.4), et que la tubulure d'échappement (2.3) présente au moins une tubulure de dérivation (1.1b) avec un clapet de dérivation (1.4), qui débouche dans la tubulure d'échappement (2.3) en aval de la turbine (3), dans lequel
a) la tubulure de recirculation des gaz d'échappement (1.1a) bifurque en amont de la turbine (3) et la tubulure de dérivation (1.1b) bifurque au niveau de la tubulure de recirculation des gaz d'échappement (1.1a) ou
b) la tubulure de dérivation (1.1b) bifurque en amont de la turbine (3) et la tubulure de recirculation des gaz d'échappement (1.1a) bifurque au niveau de la tubulure de dérivation (1.1b), dans lequel
c) au moins un filtre à particules (1.2, 1.2x) est disposé dans la tubulure de recirculation des gaz d'échappement (1.1a) ou dans la tubulure de dérivation (1.1b) en amont de la tubulure de recirculation des gaz d'échappement (1.1a) ou dans la tubulure d'échappement (2.3) en amont de la tubulure de recirculation des gaz d'échappement (1.1a), dans lequel la tubulure de dérivation (1.1b) et en même temps la tubulure de recirculation des gaz d'échappement (1.1a) sont alimentées en gaz d'échappement en vue d'un fonctionnement en charge supérieur du moteur à essence, **caractérisé en ce que** ledit filtre à particules (1.2) au moins présente un revêtement à action catalytique pour convertir les gaz CO, HC et NOx et qu'un pot catalytique conçu sous la forme d'un catalyseur à 3 voies (5) est prévu en aval de la turbine (3), dans lequel la tubulure de dérivation (1.1b) débouche en amont du pot catalytique (5).

2. Système d'évacuation de gaz d'échappement (1) selon la revendication 1,
**caractérisé en ce**
**qu'**un refroidisseur (1.6) est prévu en aval du filtre à particules (1.2, 1.2x) à l'intérieur de la tubulure de recirculation des gaz d'échappement (1.1a).

3. Système d'évacuation de gaz d'échappement (1) selon la revendication 2,
**caractérisé en ce**
**que** le refroidisseur (1.6) présente une température prescrite de gaz d'échappement Ta du côté de la sortie, qui se situe au-dessus du point de rosée des substances contenues dans les gaz d'échappement.

4. Système d'évacuation de gaz d'échappement (1) selon l'une quelconque des revendications précédentes,
**caractérisé en ce**
**que** la tubulure d'admission (2.4) est conçue sous la forme d'une tubulure d'air frais (2.4a) en amont de l'orifice de la tubulure de recirculation des gaz d'échappement (1.1a) et qu'au moins un refroidisseur d'air frais (6) et qu'un clapet d'air frais papillon (2.6) sont prévus dans la tubulure d'air frais (2.4a).

5. Système d'évacuation de gaz d'échappement (1) selon la revendication 4,
**caractérisé en ce**
**que** le refroidisseur d'air frais (6) présente une température prescrite d'air frais Tf du côté de la sortie selon l'équation 150° >= Tf >= 60°.

6. Système d'évacuation de gaz d'échappement (1) selon l'une quelconque des revendications précédentes,
**caractérisé en ce**
**que** la tubulure d'admission (2.4) est conçue sous la forme d'une tubulure d'air de suralimentation (2.4b) en aval de l'orifice de la tubulure de recirculation des gaz d'échappement (1.1a) et qu'au moins un refroidisseur d'air de suralimentation (2.5) est prévu dans la tubulure d'air de suralimentation (2.4b).

7. Système d'évacuation de gaz d'échappement (1) selon la revendication 6,
**caractérisé en ce**
**que** le refroidisseur d'air de suralimentation (2.5) présente une température prescrite d'air de suralimentation Tu, où Tu <= 60°.

8. Système d'évacuation de gaz d'échappement (1) selon l'une quelconque des revendications précédentes,
**caractérisé en ce**
**qu'**un débit massique de gaz d'échappement est réglable en fonction du point de fonctionnement à l'intérieur de la tubulure de recirculation des gaz d'échappement (1.1a) par le biais de la soupape RGE (1.3) logée dans la tubulure de recirculation des gaz d'échappement (1.1a).

9. Système d'évacuation de gaz d'échappement (1) selon l'une quelconque des revendications précédentes,
**caractérisé en ce**
**qu'**un débit massique de gaz d'échappement est réglable en fonction du point de fonctionnement à l'intérieur de la tubulure de dérivation (1.1b) par le biais du clapet de dérivation (1.4) logé dans la tubulure de dérivation (1.1b).

10. Système d'évacuation de gaz d'échappement (1) selon l'une quelconque des revendications précédentes,
**caractérisé en ce**
**qu'**une autre tubulure de recirculation des gaz d'échappement (1.1c) est prévue avec une autre soupape RGE (1.5), qui bifurque au niveau de la tubulure de recirculation des gaz d'échappement (1.1a) ou au niveau de la tubulure de dérivation (1.1b), dans lequel l'autre tubulure de recirculation des gaz d'échappement (1.1c) débouche dans la tubulure d'admission (2.4) en amont d'un compresseur (4).

11. Système d'évacuation de gaz d'échappement (1) selon l'une quelconque des revendications précédentes,
**caractérisé en ce**
**qu'**un dispositif (9) est prévu pour l'apport d'air secondaire, au moyen duquel de l'air secondaire peut être amené dans la tubulure de recirculation des gaz d'échappement (1.1a) et/ou dans la tubulure de dérivation (1.1b).

12. Installation d'évacuation de gaz d'échappement et/ou moteur à essence (2) avec un système d'évacuation de gaz d'échappement (1) selon l'une quelconque des revendications précédentes.

13. Procédé de fonctionnement d'un moteur à essence (2) avec un système d'évacuation de gaz d'échappement (1) ou une installation d'évacuation de gaz d'échappement selon l'une quelconque des revendications précédentes,
**caractérisé en ce**
a) **qu'**au moins une partie du flux de gaz d'échappement est dirigée à travers le filtre à particules (1.2, 1.2x) et à travers la tubulure de dérivation (1.1b) au cours du fonctionnement du moteur à essence (2) quand la soupape RGE est au moins partiellement ouverte (1.3), dans lequel une régénération du filtre à particules (1.2, 1.2x) est effectuée ;
b) **qu'**au moins une partie du flux de gaz d'échappement est dirigée à travers le filtre à particules (1.2, 1.2x) et à travers la tubulure de dérivation (1.1b) à proximité de la turbine (3) durant et après le démarrage du moteur à essence (2) quand la soupape RGE est au moins partiellement fermée (1.3) moyennant l'ouverture du clapet de dérivation (1.4), jusqu'à ce qu'un état prédéfini exige la fermeture de la tubulure de dérivation (1.1b) ;
c) **que** la tubulure de dérivation (1.1b) est utilisée comme soupape de décharge au cours du fonctionnement en charge supérieur du moteur à essence (2) ou au moins pratiquement à pleine charge pour diriger au moins une partie du flux de gaz d'échappement à proximité de la turbine (3), dans lequel une régénération du filtre à particules (1.2, 1.2x) est effectuée.

14. Procédé selon la revendication 13,
**caractérisé en ce**
**que**, lors de l'apport d'air secondaire à l'aide du dispositif (9),
a) la soupape RGE (1.3) s'ouvre et des gaz d'échappement (7) sont dirigés au choix en complément à travers la tubulure de dérivation (1.1b) ou
b) la soupape RGE (1.3) se ferme et des gaz d'échappement (7) sont dirigés en alternative à travers la tubulure de dérivation (1.1b).

15. Procédé selon la revendication 13 ou 14,
**caractérisé en ce**
**que** l'insufflation d'air secondaire peut être aussi introduite dans la tubulure RGE (1.1a/b).
